# EUROPEAN PATENT APPLICATION

(11) **EP 4 845 212 A1**
(43) Date of publication of application: **25.11.2026**
(21) Application number: 25751437.2
(22) Date of filing: 27.01.2025
(51) Int. Cl.: H04W 28/02

(54) **TRAFFIC CONGESTION ANALYSIS METHOD AND COMMUNICATION APPARATUS**

(30) Priority: 08.02.2024 CN 202410178163
(71) Applicant: Huawei Technologies Co., Ltd., Shenzhen, Guangdong 518129 (CN)
(72) Inventor: HUANG, Zhengyi, Shenzhen, Guangdong 518129 (CN); XU, Ying, Shenzhen, Guangdong 518129 (CN); JI, Xianju, Shenzhen, Guangdong 518129 (CN); SHI, Xiaoli, Shenzhen, Guangdong 518129 (CN); XU, Ruiyue, Shenzhen, Guangdong 518129 (CN)
(74) Representative: Huawei European IPR
(86) International application number: PCT/CN2025/075467
(87) International publication number: WO 2025/167837

(57) **Abstract**

A traffic congestion analysis method and a communication apparatus are provided. The method includes: receiving a first message, where the first message is for requesting execution of a management data analytics MDA task, the first message includes an analysis type, and the analysis type is traffic congestion analysis; and sending a second message, where the second message includes a traffic congestion analysis result. According to the method, an MDA consumer can perceive traffic congestion in a timely manner, thereby implementing an optimization measure and effectively improving user experience.

## Description

This application claims priority to Chinese Patent Application No. 202410178163.2, filed with the China National Intellectual Property Administration on February 8, 2024 and entitled "TRAFFIC CONGESTION ANALYSIS METHOD AND COMMUNICATION APPARATUS", which is incorporated herein by reference in its entirety.

### TECHNICAL FIELD

This application relates to the communication field, and more specifically, to a traffic congestion analysis method and a communication apparatus.

### BACKGROUND

Traffic congestion is a major issue in mobile communication networks. Congestion severely affects network quality, leading to possible problems such as failures of terminals to access a network, and difficulty in initiating or receiving calls and sending SMS messages. The occurrence of traffic congestion is usually a gradual escalation process. As traffic increases to a specific extent, user experience degrades severely, causing user complaints. Frequent congestion severely affects network reputation. Therefore, how to quickly perceive traffic congestion becomes an urgent problem to be resolved by network operators.

### SUMMARY

This application provides a traffic congestion analysis method and a communication apparatus, to perceive traffic congestion in a timely manner.

According to a first aspect, a traffic congestion analysis method is provided. The method may be performed by a first management device, or may be performed by a component (for example, a chip, a chip system, or a circuit) of the first management device. This is not limited in this application. For example, the first management device is a management device corresponding to an MDA producer.

The method may include: receiving a first message, where the first message is for requesting execution of a management data analytics MDA task, the first message includes an analysis type, and the analysis type is traffic congestion analysis; and sending a second message, where the second message includes a traffic congestion analysis result.

In the foregoing technical solution, a scenario type of traffic congestion analysis is introduced into a management data analytics function, so that an MDA producer can help an MDA consumer perceive traffic congestion in a timely manner, thereby implementing an optimization measure and effectively improving user experience.

In some implementations of the first aspect, the first message includes policy information, the policy information includes at least one of first information and second information, the first information is for identifying burst traffic congestion, and the second information is for identifying non-burst traffic congestion.

In the foregoing technical solution, the first message carries the first information and/or the second information, so that the MDA producer can perform burst traffic congestion analysis (that is, identify a burst congestion scenario) based on the first information, and perform non-burst traffic congestion analysis (that is, identify a non-burst congestion scenario/a routine congestion scenario) based on the second information.

In some implementations of the first aspect, the first information or the second information includes an analysis parameter, and the analysis parameter includes at least one of an average user number threshold, a physical resource block PRB utilization threshold, a downlink user rate threshold, a deviation of an average user number threshold, and a deviation of a downlink PRB utilization threshold.

In the foregoing technical solution, collaborative analysis may be performed based on configured analysis parameters, that is, whether all configured analysis parameters are met is determined, and whether a congestion scenario is an actual congestion scenario is determined based on a determining result.

In some implementations of the first aspect, the first message further includes third information, and the third information indicates an applicable scope of the policy information.

Based on the foregoing technical solution, different pieces of policy information may be configured for different scopes, thereby improving flexibility of traffic congestion analysis. For example, the third information may include a cell identifier list, a carrier bandwidth identifier list, a base station identifier list, or the like. In some implementations of the first aspect, the traffic congestion analysis result includes a traffic congestion type, and the traffic congestion type is burst traffic congestion or non-burst traffic congestion. Based on the foregoing technical solution, the MDA consumer can provide different optimization measures for different congestion scenarios based on the traffic congestion type indicated in the traffic congestion analysis result, thereby effectively improving user experience.

In some implementations of the first aspect, the traffic congestion analysis result includes at least one of the following analysis results: a traffic congestion state, a traffic congestion level, traffic congestion area information, and a recommended optimization measure for traffic congestion, where the traffic congestion state is potential congestion, actual congestion, or congestion vanished.

Based on the foregoing technical solution, the MDA consumer may provide a precise optimization measure based on more types of analysis results, thereby effectively improving user experience.

In some implementations of the first aspect, the recommended optimization measure includes a recommended optimization measure for burst traffic congestion and a recommended optimization measure for non-burst traffic congestion, where the recommended optimization measure for burst traffic congestion includes at least one of the following optimization measures: performing mobility robustness optimization MRO, performing mobility load balancing MLB, and performing coverage and capacity optimization CCO, and the recommended optimization measure for non-burst traffic congestion includes at least one of the following optimization measures: performing MRO, performing MLB, performing CCO, adding a sector, and adding a base station.

In some implementations of the first aspect, the method further includes: receiving a third message, where the third message includes an optimization measure for traffic congestion, and the third message indicates to perform the optimization measure.

In the foregoing technical solution, after the MDA producer sends the traffic congestion analysis result, the MDA consumer may indicate, to the MDA producer based on the traffic congestion analysis result, an optimization measure that needs to be implemented, thereby effectively improving user experience.

In some implementations of the first aspect, the first message further includes analysis result requirement information, and the analysis result requirement information is for requesting a specific analysis result.

In the foregoing technical solution, the MDA consumer may indicate the MDA producer to report a specific required analysis result, thereby improving experience of the MDA consumer.

According to a second aspect, a traffic congestion analysis method is provided. The method may be performed by a second management device, or may be performed by a component (for example, a chip, a chip system, or a circuit) of the second management device. This is not limited in this application. It may be understood that the second management device is a management device corresponding to an MDA consumer.

The method may include: sending a first message, where the first message is for requesting execution of a management data analytics MDA task, the first message includes an analysis type, and the analysis type is traffic congestion analysis; and receiving a second message, where the second message includes a traffic congestion analysis result.

For beneficial effects of the second aspect, refer to the descriptions of the first aspect. Details are not described herein again.

In some implementations of the second aspect, the first message includes policy information, the policy information includes at least one of first information and second information, the first information is for identifying burst traffic congestion, and the second information is for identifying non-burst traffic congestion.

In some implementations of the second aspect, the first information or the second information includes an analysis parameter, and the analysis parameter includes at least one of an average user number threshold, a physical resource block PRB utilization threshold, a downlink user rate threshold, a deviation of an average user number threshold, and a deviation of a downlink PRB utilization threshold.

In some implementations of the second aspect, the first message further includes third information, and the third information indicates an applicable scope of the policy information.

In some implementations of the second aspect, the traffic congestion analysis result includes a traffic congestion type, and the traffic congestion type is burst traffic congestion or non-burst traffic congestion.

In some implementations of the second aspect, the traffic congestion analysis result includes at least one of the following analysis results: a traffic congestion state, a traffic congestion level, traffic congestion area information, and a recommended optimization measure for traffic congestion, where the traffic congestion state is potential congestion, actual congestion, or congestion vanished.

In some implementations of the second aspect, the recommended optimization measure includes a recommended optimization measure for burst traffic congestion and a recommended optimization measure for non-burst traffic congestion, where the recommended optimization measure for burst traffic congestion includes at least one of the following optimization measures: performing mobility robustness optimization MRO, performing mobility load balancing MLB, and performing coverage and capacity optimization CCO, and the recommended optimization measure for non-burst traffic congestion includes at least one of the following optimization measures: performing MRO, performing MLB, performing CCO, adding a sector, and adding a base station.

In some implementations of the second aspect, the method further includes: determining a third message based on the traffic congestion analysis result, where the third message includes an optimization measure for traffic congestion, and the third message indicates to perform the optimization measure; and sending the third message.

In some implementations of the second aspect, the first message further includes analysis result requirement information, and the analysis result requirement information is for requesting a specific analysis result.

According to a third aspect, a communication apparatus is provided. The apparatus is configured to perform the method according to the first aspect or the second aspect. Specifically, the apparatus may include a unit and/or a module configured to perform the method according to any one of the implementations of the first aspect or the second aspect, for example, a processing unit and/or a communication unit.

In an implementation, the apparatus is a management device (for example, a first management device or a second management device). When the apparatus is the management device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the management device. When the apparatus is the chip, the chip system, or the circuit used in the device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communication apparatus is provided. The apparatus includes at least one processor, configured to perform the method according to any one of the implementations of the first aspect or the second aspect.

Optionally, the apparatus further includes a memory, configured to store a program. Correspondingly, the at least one processor is configured to execute a computer program or instructions stored in the memory.

Optionally, the apparatus further includes a communication interface. The communication interface is coupled to the processor, and may be configured to input information to the processor, or output information in the processor.

In an implementation, the apparatus is a management device (for example, a first management device or a second management device).

In another implementation, the apparatus is a chip, a chip system, or a circuit used in the management device.

According to a fifth aspect, this application provides a processor, configured to perform the methods according to the foregoing aspects.

Operations such as sending and obtaining/receiving related to the processor may be understood as operations such as an output and an input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable storage medium stores program code to be executed by a device, and the program code is used to perform the method according to any one of the implementations of the first aspect or the second aspect.

According to a seventh aspect, a computer program product including instructions is provided. When the computer program product is run on a computer, the computer is caused to perform the method according to any one of the implementations of the first aspect or the second aspect.

According to an eighth aspect, a chip is provided. The chip includes a processor and a communication interface. The processor reads, through the communication interface, instructions stored in a memory, to perform the method according to any one of the implementations of the first aspect or the second aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the implementations of the first aspect or the second aspect.

According to a ninth aspect, a communication system is provided, including a first management device and a second management device. The first management device is configured to perform the method according to any one of the implementations of the first aspect, and the second management device is configured to perform the method according to any one of the implementations of the second aspect.

### BRIEF DESCRIPTION OF DRAWINGS

FIG. 1 is a diagram of a system architecture 100 to which this application is applicable;
FIG. 2 is a schematic flowchart of a traffic congestion analysis method 200 according to this application;
FIG. 3 is a block diagram of a communication apparatus 300 according to an embodiment of this application;
FIG. 4 is a diagram of another communication apparatus 400 according to an embodiment of this application; and
FIG. 5 is a diagram of a chip system 500 according to an embodiment of this application.

### DESCRIPTION OF EMBODIMENTS

The following describes technical solutions of embodiments of this application with reference to accompanying drawings.

Before embodiments of this application are described, the following several descriptions are first provided.
1. In the descriptions of embodiments of this application, unless otherwise stated, "a plurality of" means two or more.
2. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
3. Various numbers in this application are merely used for differentiation for ease of description, but are not intended to limit the scope of this application. Sequence numbers in this application do not mean execution sequences. The execution sequence of processes should be determined based on functions and internal logic of the processes. For example, in the specification, claims, and accompanying drawings of this application, the terms "first", "second", "third", and various other terms, such as reference numerals, are intended to distinguish between similar objects, but are not intended to limit a size, content, a sequence, a time sequence, a priority, an importance, or the like of the plurality of objects. For example, first information and second information do not indicate a difference in an information amount, content, a priority, importance, or the like.
4. Terms "include" and "have" and any other variants thereof are intended to cover the non-exclusive inclusion. For example, a process, method, system, product, or device that includes a series of steps or units is not necessarily limited to those expressly listed steps or units, but may include other steps or units not expressly listed or inherent to such a process, method, system, product, or device.
5. In embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. Information may undergo necessary processing, for example, a format change, between a source end for sending the information and a destination end. However, the destination end may understand valid information from the source end. Similar expressions in this application may be understood similarly. Details are not described herein.
   In other words, sending and receiving may be performed between devices, for example, between a terminal device #1 and a terminal device #2, or may be performed inside a device, for example, sending or receiving between components, modules, chips, software modules, or hardware modules inside the device through a bus, a cable, or an interface.
6. In embodiments of this application, an indication includes a direct indication (also referred to as an explicit indication) and an implicit indication. Directly indicating information A means including the information A. Implicitly indicating the information A means indicating the information A by using a correspondence between the information A and information B and directly indicating the information B. The correspondence between the information A and the information B may be predefined, prestored, pre-burned, or preconfigured.
7. In embodiments of this application, information C being used to determine information D includes the information D being determined only based on the information C, and also includes the information D being determined based on the information C and other information. In addition, the information C being used to determine the information D may further include an indirect determining case, for example, a case in which the information D is determined based on information E, and the information E is determined based on the information C.
8. "Store" or "save" in embodiments of this application may mean "being stored in one or more memories". The one or more memories may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application.
9. Arrows or blocks shown by dashed lines in diagrams of the accompanying drawing in the specification of this application indicate optional steps or optional modules.

The technical solutions in embodiments of this application may be applied to various communication systems, including but not limited to a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, and the like. The technical solutions provided in this application may be further applied to a future communication system, for example, a 6th generation mobile communication system. In addition, the technical solutions may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, another communication system, and the like. This is not limited in this specification.

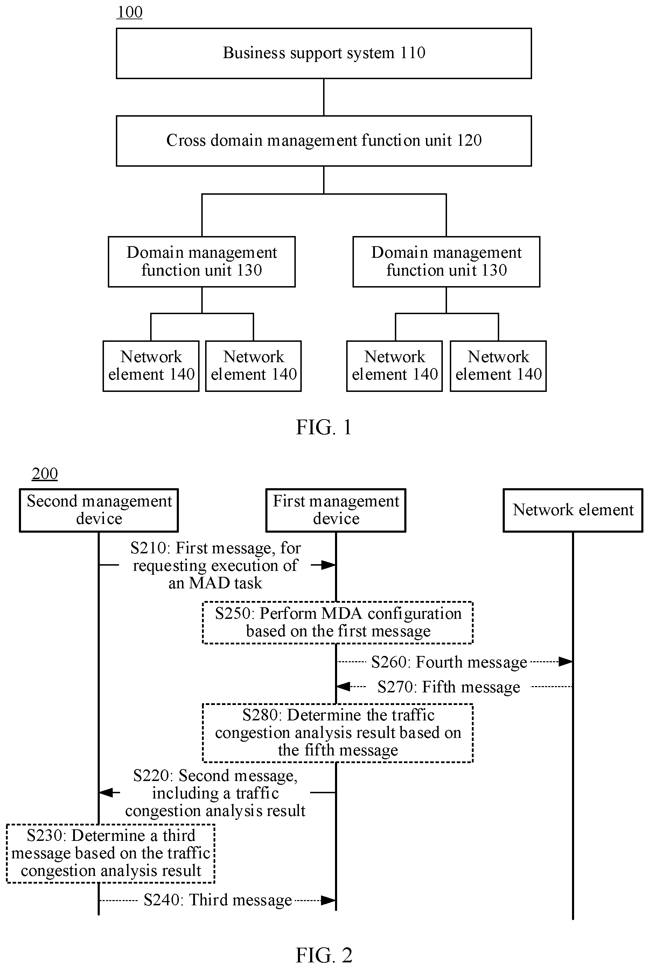

FIG. 1 is a diagram of a service management architecture 100 to which this application is applicable. The architecture 100 includes a service operation system 110, a cross domain management function (cross domain management function, CD-MnF) unit 120, a domain management function (domain management function, Domain-MnF) unit 130, and a network element (element) 140. The following describes functions of the parts.
(1) The service operation system 110 is configured to provide a service operation function, including functions such as service provisioning, service assurance, and service scheduling. For example, the service operation system 110 may include a service operation system of a vertical industry, or a service operation system of an operator, for example, a business support system (business support system, BSS) or a system that can implement a communication service management function (communication service management function, CSMF).
(2) The cross domain management function unit 120 may also be referred to as a network management function (network management function, NMF) unit, for example, may be a network management entity, for example, a network management system (network management system, NMS) or a network function management service consumer (network function management service consumer, NFMS_C).

The cross domain management function unit 120 provides one or more of the following management functions or management services: network lifecycle management, network deployment, network fault management, network performance management, network configuration management, network assurance, a network optimization function, translation of a network intent from a communication service provider (intent from communication service provider, Intent-CSP), and the like.

The network indicated in the management function or the management service may include one or more network elements, or one or more subnets. For example, the network may alternatively be a network slice. In other words, the network management function unit may be a network slice management function (network slice management function, NSMF) unit, a cross domain management data analytics function (management data analytics function, MDAF) unit, a cross domain self-organizing network (self-organizing network, SON) function, or a cross domain intent management function (intent driven management service, MnS) unit.

Optionally, in some deployment scenarios, the cross domain management function unit 120 may further provide subnet lifecycle management, subnet deployment, subnet fault management, subnet performance management, subnet configuration management, subnet assurance, a subnet optimization function, translation of an intent from communication service provider (Intent-CSP) or an intent from communication service consumer (intent from communication service consumer, Intent-CSC), and the like. The subnet herein includes a plurality of small subnets, and may be a network slice subnet.

(3) The domain management function unit 130 may also be referred to as a subnet management function (network management function, NMF) unit or a network element management function unit. For example, the domain management function unit 130 may be a network element management entity, for example, a wireless automation engine (MBB automation engine, MAE), an element management system (element management system, EMS), or a network function management service provider (network function management service provider, NFMS_P).

The domain management function unit 130 provides one or more of the following functions or management services: subnet or network element lifecycle management, subnet or network element deployment, subnet or network element fault management, subnet or network element performance management, subnet or network element assurance, a subnet or network element optimization function, translation of an intent from a subnet or a network element (intent from network operator, Intent-NOP), and the like. The foregoing subnet includes one or more network elements. The subnet may alternatively include a subnet, in other words, one or more subnets form a larger subnet.

Optionally, the subnet may be a network slice subnet. A domain management system may be a network slice subnet management function (network slice subnet management function, NSSMF) unit, a domain management data analytics function (management data analytics function, MDAF) unit, a domain self-organizing network (self-organizing network, SON) function, a domain intent (Intent Driven) management function MnS unit, or the like.

The domain management function unit 130 may be classified by network type or administrative region.

By network type, the domain management function unit 130 may be classified into a radio access network domain management function (radio access network domain management function, RAN-Domain-MnF) unit, a core network domain management function (core network domain management function, CN-Domain-MnF) unit, a transport network domain management function (transport network domain management function, TN-Domain-MnF) unit, and the like.

It should be noted that the domain management function unit 130 may alternatively be a domain network management system, and may manage one or more of an access network, a core network, or a transport network.

By administrative region, the domain management function unit 130 may be classified into a domain management function unit 130 for a specific region, for example, a domain management function unit for Shanghai, a domain management function unit for Beijing, or the like.

(4) The network element 140 is an entity that provides a network service, and may include a core network element and an access network element. The core network element may be a device, for example, an access and mobility management function (access and mobility management function, AMF) network element, a session management function (session management function, SMF) network element, a policy control function (policy control function, PCF) network element, a network data analytics unit (network data analytics function, NWDAF) network element, a network repository function (network repository function, NRF) network element, or a gateway. The access network element may be a device configured to communicate with a terminal device. The access network element may also be referred to as an access network device or a radio access network device, and may be a transmission reception point (transmission reception point, TRP), or may be an evolved NodeB (evolved NodeB, eNB, or eNodeB) in an LTE system, or may be a home base station (for example, a home evolved NodeB or a home NodeB, HNB), a baseband unit (baseband unit, BBU), or a radio controller in a cloud radio access network (cloud radio access network, CRAN) scenario. Alternatively, the access network element may be a relay station, an access point, a vehicle-mounted device, a wearable device, a network device in a 5G network, a network device in a future evolved public land mobile network (public land mobile network, PLMN), or the like; or may be an access point (access point, AP) in a wireless local area network (wireless local area network, WLAN); or may be a gNB in a new radio (new radio, NR) system. This is not limited in embodiments of this application. In a network structure, the access network element may include a central unit (central unit, CU) node, a distributed unit (distributed unit, DU) node, a radio access network (radio access network, RAN) device including a CU node and a DU node, or a RAN device including a control plane CU node (CU-CP node), a user plane CU node (CU-UP node), and a DU node.

The network element 140 may provide one or more of the following management functions or management services: network element lifecycle management, network element deployment, network element fault management, network element performance management, network element assurance, a network element optimization function, translation of an intent from a network element, and the like.

For example, if the management service is a management service provided by the cross domain management function unit 120, the cross domain management function unit 120 is a management service producer, and the service support system 110 is a management service consumer.

For example, if the management service is a management service provided by the domain management function unit 130, the domain management function unit 130 is a management service producer, and the cross domain management function unit 120 is a management service consumer.

For example, if the management service is a management service provided by the network element 140, the network element 140 is a management service producer, and the domain management function unit 130 is a management service consumer.

Related functions of the management service consumer and the management service producer may be implemented through a management device. For example, all functions of the management service consumer and the management service producer may be integrated into the management device in a software manner. For ease of description, in this application, a network entity corresponding to a management service producer is a first management device, and a network entity corresponding to a management service consumer is a second management device. However, it should be understood that the network entity may alternatively have another name. This is not limited in embodiments of this application.

Optionally, the system architecture 100 may further include another network entity, for example, a network controller or a mobility management entity. This is not limited in embodiments of this application.

For ease of understanding of the solutions in embodiments of this application, the following describes terms that may be used in embodiments of this application.
(1) Management data analytics (management data analytics, MDA): MDA, as a key enabler of automation and intelligence, is considered a foundational capability for mobile network and service management. MDA provides a capability of processing and analyzing data related to states of network and service events, including performance measurement, key performance indicators (key performance indicators, KPIs), quality of experience (quality of experience, QoE) reports, alarms, configuration data, network analytics data, and the like, to provide an analytics output, that is, statistics or predictions, root cause analysis issues, and may further include recommendations to enable necessary actions for network and service operations. An MDA output is provided by a management data analytics service (management data analytics service, MDAS) producer to a consumer that requested the analytics. MDA can identify ongoing issues impacting performance of the network and the service, and help identify in advance potential issues that may cause a potential fault and/or performance degradation. MDA can also help predict network and service requirements to implement resource allocation and deployment in a timely manner, thereby achieving fast network and service deployment. In combination with artificial intelligence (artificial intelligence, AI) and machine learning (machine learning, ML) technologies, MDA can bring intelligence and automation to network service management and coordination. An MDAS can be consumed by various consumers, such as an MnF (that is, an MnS service producer/consumer for network and service management), a network function (network function, NF) (for example, an NWDAF), an SON function, a network and service optimization tool/function, a service level specification (service level specification, SLS) assurance function, a human operator, and the like.
(2) Traffic congestion (traffic congestion): Required RAN resources for transmitting user data exceed an available RAN capacity for transmitting user data for several seconds or longer. Traffic congestion may be caused by various reasons, such as sudden increase of users, inappropriate mobility parameter configurations, or unbalanced network traffic load. Traffic congestion may cause various types of performance degradation, such as degraded user experience and insufficient physical resource block (physical resource block, PRB) utilization.

Traffic congestion usually occurs in a ramp-up process. As traffic increases to a specific extent, user experience degrades severely, causing user complaints. Therefore, operators expect to quickly perceive traffic congestion and implement fast closed-loop control.

In view of this, this application provides a traffic congestion analysis method, to effectively resolve the foregoing technical problems. The following describes in detail the method provided in this application.

FIG. 2 is a schematic flowchart of a traffic congestion analysis method 200 according to this application. The method may be applied to the system architecture 100 shown in FIG. 1. A first management device is a network entity corresponding to a management service producer, and a second management device is a network device corresponding to a management service consumer. For example, in this application, an example in which a management service is an MDA service provided by a domain management function unit is used for description. The method includes the following steps.

S210: The second management device sends a first message to the first management device, where the first message is for requesting execution of an MDA task, the first message includes an analysis type, and the analysis type is traffic congestion analysis. Correspondingly, the first management device receives the first message from the second management device.

Optionally, the first message includes policy information, the policy information includes at least one of first information and second information, the first information is for identifying burst traffic congestion, and the second information is for identifying non-burst traffic congestion. It may be understood that the first management device may perform burst traffic congestion analysis based on the first information, and the first management device may perform non-burst traffic congestion analysis based on the second information. In this application, the first information may be referred to as a policy for identifying burst traffic congestion, and the second information may be referred to as a policy for identifying non-burst traffic congestion. Names of the first information and the second information are not limited in this application.

Non-burst traffic congestion may be understood as predictable traffic congestion, for example, traffic congestion caused by traffic jams during commuting peak hours. Burst traffic congestion may be understood as unpredictable traffic congestion, for example, traffic congestion caused by natural disasters or major public health events. In this application, burst traffic congestion may also be referred to as actual traffic congestion, and non-burst traffic congestion may also be referred to as routine traffic congestion. Names of non-burst traffic congestion and burst traffic congestion are not limited in this application.

In this application, the analysis type is traffic congestion analysis, and may also be understood as that an MDA type is a traffic congestion analysis type.

Optionally, the first information or the second information includes at least one of a plurality of following analysis parameters (which may also be referred to as policy parameters), and a plurality of policy parameters include at least one of an average user number threshold, a PRB utilization threshold, a downlink user rate threshold, a deviation of an average user number threshold, and a deviation of a downlink PRB utilization threshold.

It may be understood that the first management device may perform collaborative analysis based on analysis parameters configured by the second management device, that is, determine whether all configured analysis parameters are met, and determine, based on a determining result, whether a congestion scenario is an actual congestion scenario.

For example, the foregoing thresholds may be implemented by using a data type. The data type includes a value (value) and a direction (direction), where the value represents a critical value, and the direction represents that a value of an indicator is greater than or less than the critical value.

It may be understood that one policy parameter includes one piece of indicator information and one piece of threshold information. For example, a policy parameter is average user number >100, indicator information corresponding to the policy parameter is "average user number", and corresponding threshold information is ">100". A specific indication manner of the policy parameter is not limited in this application.

In an implementation, indicator information and threshold information that correspond to one policy parameter may be indicated by using two attributes. For example, an indication manner is shown in Table 1.

**Table 1**

| Attribute name | Corresponding value (example) |
|---|---|
| Indicator | Average user number |
| Threshold | Value: 100; Direction: > |

In another implementation, indicator information and threshold information that correspond to one policy parameter may be indicated by using one attribute. For example, an indication manner is shown in Table 2.

**Table 2**

| Attribute name | Corresponding value (example) |
|---|---|
| Policy parameter | Average user number; Value: 100; Direction: > |

It may be understood that indicator deviation (such as average user deviation and downlink PRB utilization deviation) is an offset between a live network value of the indicator and a historical baseline of the indicator. The historical baseline may be obtained based on historical data of the indicator. For example, the deviation may satisfy the following formula: Deviation = (Live network value - Historical baseline)/Historical baseline × 100%. For example, data corresponding to the indicator in a recent period of time (for example, a past week or a first week in the past) may be collected, and the historical baseline of the indicator is determined based on the collected historical data, to determine the indicator deviation.

Optionally, a manner of calculating the deviation may be customized by the first management device. This is not limited in this application.

The following describes the policy information by using an example. The policy information includes the first information and the second information, and the first information and the second information are shown as follows.

For example, the first information includes the following policy parameters:
(1) average user number >100, downlink PRB utilization >50%, and downlink user rate <50 Mbps; and
(2) average user number threshold deviation >20%, and downlink PRB utilization threshold deviation >20%.

For example, the second information includes the following policy parameters:
(1) average user number >150, downlink PRB utilization >60%, and downlink user rate <50 Mbps; and
(2) average user number threshold deviation <10%, and downlink PRB utilization threshold deviation <10%.

Optionally, the first message may not include the policy information, and the policy information may be set on a first management device side.

Optionally, the first message further includes third information, indicating an applicable scope of the policy information.

Optionally, the third information may include a cell identifier list, a carrier bandwidth identifier list, a base station identifier list, or the like. For example, if the third information includes the cell identifier list, it indicates that the policy information is applicable to a cell in the cell identifier list. For example, if the third information includes the carrier bandwidth identifier list, it indicates that the policy information is applicable to a cell corresponding to a carrier bandwidth in the carrier bandwidth identifier list.

Optionally, the first message may include a plurality of pieces of policy information and a plurality of pieces of third information, and the plurality of pieces of policy information is in one-to-one correspondence with the plurality of pieces of third information. In this solution, different pieces of policy information are configured for different scopes, thereby improving flexibility of traffic congestion analysis.

It may be understood that, if the first message does not include the third information, it may be considered by default that the policy information is applicable to all carrier bandwidths, or it may be understood that the policy information is applicable to all cells.

Optionally, the first message may further include congestion analysis time information, indicating the first management device to perform traffic congestion analysis according to specified time. The specified time may be a time range, a specific time point, a time interval, or the like. For example, the time information may be set to 60 minutes (min), 15 minutes, or 1 minute (that is, the time interval), or the time information may be peak time or a holiday, or the time information may be 12 o'clock every day (that is, the specific time), or the time information may be 7 o'clock to 9 o'clock in the morning, or 5 o'clock to 7 o'clock in the afternoon (that is, the time range).

Optionally, the first message further includes fourth information, and the fourth information indicates whether the first management device needs to generate an optimization recommendation for alleviating traffic congestion. If the fourth information indicates that the optimization recommendation is required, the first management device generates a corresponding recommended optimization measure when perceiving traffic congestion. If the fourth information indicates that the optimization recommendation is not required, the first management device does not need to generate a recommended optimization measure when perceiving traffic congestion.

Optionally, the first message further includes an analytics scope.

For example, the analytics scope may directly indicate at least one cell or network element (for example, a base station) or a specific network area. For example, the cell in the analytics scope may be indicated by using a cell global identifier (cell global identifier, CGI), a physical cell identifier (physical cell identifier, PCI), or a cell identifier (cell identifier, cell ID), the base station in the analytics scope may be indicated by using a base station identifier, and the network area in the analytics scope may be indicated by using latitude and longitude, or may be indicated by using a cell identifier list (cell identifiers such as PCIs, CGIs, or cell IDs) or a base station identifier list.

For example, the analytics scope indicates at least one geographical area. For example, if the analytics scope is a geographical area A, all cells or network elements managed by an MDA consumer in the area A are indicated, or a specific cell or network element managed by the MDA consumer in the area A is indicated.

Optionally, the first message is an MDA request (request) message. For example, an MDA producer creates a managed object instance (managed object instance, MOI) for the MDA consumer and requests an information object class (information object class, IOC) (refer to a createMOI operation defined in TS 28.532). The MDA consumer uses a related attribute in an MDA request message in the operation.

It may be understood that, in this application, MDA may be an MDAS, and correspondingly, the MDA producer may also be referred to as an MDAS producer.

In a possible implementation, the MDA request message includes at least one of a plurality of attributes shown in Table 3, and the plurality of attributes are respectively an MDA request output (requestMDAOutputs), a reporting method (reportingMethod), a reporting target (reportingTarget), an analytics scope (analyticsScope), a start time (StartTime), a stop time (StopTime), and an analysis policy (analysisPolicy). For example, a data type of the MDA request output includes at least one of a plurality of attributes shown in Table 4, which are respectively an MDA type (mDAType) and an MDA output filter element (mDAOutputIEFilters).

Optionally, the analysis policy (analysisPolicy) may alternatively be included in the data type of the MDA request output. Further, the analysis policy (analysisPolicy) includes two attributes, which are respectively a policy for burst traffic congestion and a policy for non-burst traffic congestion.

**Table 3**

| Attribute name | Definition |
|---|---|
| MDA request output | Indicates a request analytics output for an MDA request. The attribute is a data type. |
| Reporting method | Indicates a reporting method of an analytics output selected by an MnS consumer. Allowed values: file, streaming, and notification |
| Reporting target | Indicates a reporting target of an MDA output. |
| Analytics scope | Indicates a scope of analytics requested by the MnS consumer. |
| Start time | Indicates a start time of the analysis requested by the MnS consumer. |
| Stop time | Indicates an end time of the analysis requested by the MnS consumer. |
| Analysis policy | Indicates a policy for an MnS producer to perform traffic congestion analysis. |

**Table 4**

| Attribute name | Definition |
|---|---|
| MDA type | Indicates the MDA type, that is, an MDA capability. For a specific value of the MDA type defined by the MDA capability, refer to a definition in Clause 8 in TS 28.104. It may be understood that the MDA type in this application is a traffic congestion analysis type. |
| MDA output filter element | Provides a filter for an analytics output information element of the MDA type for an MDA request. Any output parameter of traffic congestion analysis in this application may be used as a filter element. This is not limited in this application. |

It may be understood that the MDAS producer (that is, the first management device) may execute the MDA task based on the MDA type (that is, an example of the analysis type in the first message) specified in Table 4 and/or the analysis policy (that is, an example of the policy information in the first message) in Table 3.

S220: The first management device sends a second message to the second management device, where the second message includes a traffic congestion analysis result. Correspondingly, the second management device receives the second message from the first management device.

Optionally, the traffic congestion analysis result includes at least one of the following analysis results: a traffic congestion type, a traffic congestion state, a traffic congestion level, traffic congestion area information, and a recommended optimization measure for traffic congestion. The traffic congestion type may also be referred to as a traffic congestion issue. This is not limited in this application. The following describes the analysis results listed above in detail.
(1) The traffic congestion type is burst traffic congestion or non-burst traffic congestion.

It should be noted that, it may be considered that burst traffic congestion occurs only if all policy parameters in the first information are met. Similarly, it may be considered that non-burst traffic congestion occurs only if all policy parameters in the second information are met.

Optionally, when whether a policy parameter is met is determined, statistical data of an indicator corresponding to the policy parameter may be compared with a threshold corresponding to the policy parameter. For example, the statistical data may be statistical data of each cell, or statistical data of each base station, or statistical data of each subnet area, or statistical data of each carrier. This is not limited in this application.

(2) The traffic congestion state is potential congestion, actual congestion, or congestion vanished.

Optionally, the traffic congestion state further includes congestion duration.

(3) The traffic congestion level may be mild congestion, moderate congestion, or severe congestion.

For example, a level #1, a level #2, and a level #3 may respectively indicate mild congestion, moderate congestion, and severe congestion. It may be understood that the foregoing levels are merely examples of division. In actual application, division may be further performed at a finer granularity.

Optionally, the traffic congestion level may be customized by the MDA producer. This is not limited in this application.

(4) The traffic congestion area information indicates an area in which traffic congestion occurs.

For example, the traffic congestion area information may include at least one of the following information: longitude and latitude information, a cell identifier, an identifier of a network element (for example, a base station), and a carrier bandwidth identifier.

For example, when traffic congestion occurs in a plurality of cells, the traffic congestion area information may include a list, for example, a corresponding cell identifier information list, a corresponding base station identifier information list, a corresponding carrier bandwidth identifier information list, or a corresponding longitude and latitude information list.

(5) The recommended optimization measure includes a recommended optimization measure for burst traffic congestion and/or a recommended optimization measure for non-burst traffic congestion.

Optionally, the congestion analysis result further includes an identifier of a cell or a base station to which the recommended optimization measure is applicable. For example, the congestion analysis result includes a recommended optimization measure #1 and an identifier of a cell #1 to which the recommended optimization measure #1 is applicable, and a recommended optimization measure #2 and an identifier of a cell #2 to which the recommended optimization measure #2 is applicable.

Based on the foregoing analysis results, the MDA consumer can provide different optimization measures for different congestion scenarios based on the traffic congestion type indicated in the traffic congestion analysis result, to improve user experience. Further, the MDA consumer may alternatively provide a precise optimization measure based on the foregoing analysis result of another type.

Optionally, the recommended optimization measure for burst traffic congestion includes at least one of the following optimization measures: performing mobility robustness optimization (mobility robustness optimization, MRO), performing mobility load balancing (mobility load balancing, MLB), and performing coverage and capacity optimization (coverage and capacity optimization, CCO).

Optionally, the recommended optimization measure for non-burst traffic congestion includes at least one of the following optimization measures: performing MRO, performing MLB, performing CCO, adding a sector for a base station, and adding a base station.

For example, the performing MRO may be adjusting a cell individual offset (cell individual offset, CIO), adjusting cell time to trigger (time to trigger, TTT), and the like.

For example, the performing MLB may be adjusting a CIO, adjusting PRB resource allocation, adjusting a triggering mode for load balancing, adjusting a user number threshold for load balancing, adjusting a user number offset for load balancing, adjusting a direction for load balancing, and the like.

For example, the performing CCO may be adjusting a radio frequency parameter and adjusting a beam parameter. Further, the adjusting the radio frequency parameter may be adjusting a downtilt, an azimuth, a transmit power of a base station, a power offset, and the like.

Optionally, the second management device may authorize the first management device to directly perform the recommended optimization measure determined by the first management device, without notifying the second management device.

Optionally, the first message further includes analysis result requirement information, and the analysis result requirement information is for requesting a specific analysis result. In this manner, the MDA consumer may indicate the MDA producer to report a specified analysis result, thereby improving experience of the MDA consumer. For example, if the specific analysis result is the traffic congestion type, the first management device may determine, based on an obtained measurement data of a network element and policy information, whether burst traffic congestion or non-burst traffic congestion occurs.

Optionally, if the first message does not include the analysis result requirement information, the first management device determines the traffic congestion analysis result based on the obtained measurement data of the network element, where the traffic congestion analysis result may include all default analysis results. For example, the traffic congestion analysis result includes the traffic congestion type, the traffic congestion state, the traffic congestion level, the traffic congestion area information, the recommended optimization measure for traffic congestion, and the like.

It may be understood that the MDA output filter element in Table 4 is a possible specific example of the foregoing analysis result requirement information. The specific analysis result of the analysis result requirement information request is a filter element corresponding to the MDA output filter element.

Optionally, the second message includes a traffic congestion analysis report, and the report includes the traffic congestion analysis result.

In a possible implementation, the traffic congestion analysis report includes at least one of a plurality of attributes shown in Table 5, and the plurality of attributes are respectively an MDA type (mDAType), an MDA output list (mdaOutputList), an MDA request identifier (mDARequestRef), and an analytics window (analyticsWindow). The MDA output list includes at least one of a plurality of attributes shown in Table 6, which are respectively a traffic congestion type, a traffic congestion state, a traffic congestion level, a traffic congestion area, a traffic congestion start time, a traffic congestion end time, and a recommended optimization measure.

**Table 5**

| Attribute name | Definition |
|---|---|
| MDA type | Indicates the MDA type, that is, an MDA capability. For a specific value of the MDA type defined by the MDA capability, refer to a definition in Clause 8 in TS 28.104. The MDA type in this application is a traffic congestion analysis type. |
| MDA output list | Indicates a list of output results related to a specific MDA type and may be represented by using a name of an analytics output parameter and a corresponding value thereof. |
| MDA request identifier | Identifier information of an MDARequest MOI corresponding to a result generated by the MDA producer, which is typically represented by a distinguished name (distinguished name, DN). |
| Analytics window | Indicates time when MDA analysis is performed. |

**Table 6**

| Attribute name | Definition |
|---|---|
| Traffic congestion type | Indicates a type of traffic congestion. Specific types include burst traffic congestion, non-burst traffic congestion, another type, and a customized type. |
| Traffic congestion state | Indicates a state corresponding to the traffic congestion type. The state may specifically be potential congestion, actual congestion, or congestion vanished. |
| Traffic congestion level | Indicates a level corresponding to the traffic congestion type. |
| Traffic congestion area | Indicates an area in which the traffic congestion issue occurs. |
| Traffic congestion start time | Indicates a start time at which the traffic congestion issue occurs. |
| Traffic congestion end time | Indicates an end time at which the traffic congestion issue occurs. |
| Recommended optimization measure | Indicates an optimization recommendation for the traffic congestion issue, specifically including an optimization recommendation corresponding to the foregoing traffic congestion types. |

Based on a definition of the MDA output list in Table 5, the MDA output list may be represented by using the name of the analytics output parameter and the corresponding value thereof. The parameter name herein may be an attribute name in Table 6, and the corresponding value may be at least one of a plurality of values corresponding to the attribute name. For example, the MDA output list includes the traffic congestion type, and a corresponding value may be burst traffic congestion. For another example, the MDA output list includes the traffic congestion area, and a corresponding value may be a cell #1 to a cell #5.

Optionally, if the second management device expects, after obtaining the traffic congestion analysis result, the first management device to perform some optimization measures, the method further includes S230 and S240.

S230: The second management device determines a third message based on the traffic congestion analysis result, where the third message includes an optimization measure for traffic congestion, and the third message indicates to perform the optimization measure.

It may be understood that the MDA consumer may determine, based on the traffic congestion analysis result, an optimization measure that needs to be implemented, thereby effectively improving user experience. For example, the optimization measure in the third message may be an optimization measure determined by the second management device based on the traffic congestion analysis result, and/or may be an optimization measure selected by the second management device from a recommended optimization measure reported by the first management device. This is not limited in this application.

S240: The second management device sends the third message to the first management device. Correspondingly, the first management device receives the third message from the second management device, and performs the optimization measure in the third message.

Optionally, before S220, the method further includes S250.

S250: The first management device performs MDA configuration based on the first message.

It may be understood that the configuration herein refers to configuring information or a parameter included in the first message in the first management device (or writing the information or the parameter into the first management device). For example, the MDA type of the first management device is configured for traffic congestion analysis based on the first message, and a parameter corresponding to a traffic congestion analysis policy of the first management device is modified based on the policy parameters in the policy information in the first message.

It may be understood that the traffic congestion analysis result in S220 is determined based on measurement data of a network element (for example, a base station or a cell) in the analytics scope. For example, the network element is a cell in the analytics scope in S210. Optionally, the method further includes S260 to S280.

S260: The first management device sends a fourth message to the network element, where the fourth message includes at least one measurement indicator, and the fourth message is for requesting the network element to perform measurement based on the at least one measurement indicator. Correspondingly, the network element receives the fourth message from the first management device.

It may be understood that the at least one measurement indicator is determined based on the first message. For example, if the first message includes information #1 (where the information #1 is the first information or the second information), the at least one measurement indicator includes an indicator corresponding to an analysis parameter in the information #1. For another example, if the first message includes the first information and the second information, the at least one measurement indicator includes indicators corresponding to analysis parameters in the first information and the second information. For another example, if the first message does not carry the first information or the second information, the at least one measurement indicator includes indicators corresponding to analysis parameters in the first information and the second information that are set by the first management device (or default).

S270: The first management device receives a fifth message from the network element, where the fifth message includes measurement data of the network element.

It may be understood that the measurement data herein is data obtained by measuring the network element based on the at least one measurement indicator included in the fourth message.

Optionally, if the fourth message is further for requesting the network element to report a current network configuration of the network element, the fifth message further includes the current network configuration of the network element. For example, the network configuration includes at least one of the following configurations: a bandwidth, a mobility load balancing (mobility load balancing, MLB) parameter, an L3 handover parameter, a coverage scenario, a synchronization signal block (synchronization signal and PBCH block, SSB) power offset, and the like.

For example, the first management device may include the foregoing obtained network configuration in the second message, and then the second management device may indicate, based on the received traffic congestion analysis result, the first management device to adjust the current network configuration.

For example, the first management device may determine a recommended optimization measure based on the obtained current network configuration. The recommended optimization measure indicates adjustment of the current network configuration, and is then carried in the second message.

S280: The first management device determines the traffic congestion analysis result based on the fifth message.

For specific information included in the traffic congestion analysis result, refer to the descriptions in S220. Details are not described herein again.

It may be understood that the method provided in this application may be applied to a wireless network operation and maintenance field, and includes but is not limited to operation and maintenance activities such as network management and network performance optimization.

It may be further understood that sequence numbers of the foregoing processes do not mean execution sequences. The execution sequence of the processes should be determined based on functions and internal logic of the processes, and should not be construed as any limitation on implementation processes of embodiments of this application.

It may be further understood that in some of the foregoing embodiments, a device in an existing network architecture is mainly used as an example for description. It may be further understood that a specific form of the device is not limited in embodiments of this application. For example, all devices that can implement a same function in the future are applicable to embodiments of this application.

It may be understood that, in the foregoing method embodiments, methods and operations implemented by a management device (for example, the first management device or the second management device) may alternatively be implemented by a component (for example, a chip or a circuit) of the device.

The foregoing describes in detail the method provided in embodiments of this application with reference to FIG. 1 and FIG. 2. The foregoing method is mainly described from a perspective of interaction between the first management device and the second management device. It may be understood that to implement the foregoing functions, the first management device and the second management device include corresponding hardware structures and/or software modules for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

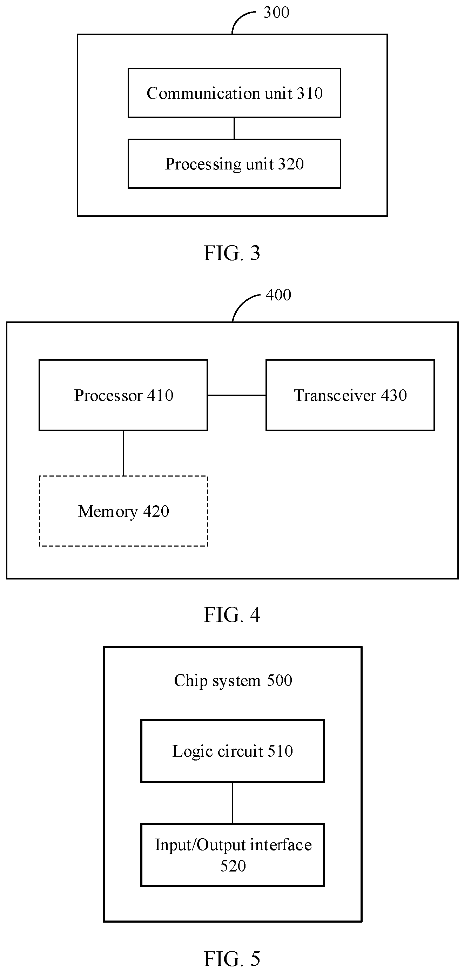

The following describes a communication apparatus provided in embodiments of this application with reference to FIG. 3 and FIG. 4. It may be understood that descriptions of apparatus embodiments correspond to the descriptions of the method embodiments. Therefore, for content that is not described in detail, refer to the foregoing method embodiments. For brevity, details of a part of content are not described again. In embodiments of this application, the device may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

The foregoing describes in detail the methods provided in this application. The following describes a communication apparatus provided in this application. In a possible implementation, the apparatus is configured to implement steps or procedures corresponding to the first management device in the foregoing method embodiments. In another possible implementation, the apparatus is configured to implement steps or procedures corresponding to the second management device in the foregoing method embodiments.

FIG. 3 is a diagram of a communication apparatus 300 according to an embodiment of this application. A transceiver unit 310 is included. The transceiver unit 310 may be configured to implement a corresponding communication function. The transceiver unit 310 may also be referred to as a communication interface or a communication unit. Optionally, the apparatus 300 further includes a processing unit 320 that may be configured to perform processing.

Optionally, the apparatus 300 may further include a storage unit. The storage unit may be configured to store instructions and/or data. The processing unit 320 may read the instructions and/or the data in the storage unit, so that the apparatus implements the foregoing method embodiments.

In a first possible design, the apparatus 300 may be the first management device in the foregoing embodiments, and the apparatus 300 may implement steps or procedures that are performed by the first management device in the foregoing method embodiments. The transceiver unit 310 may be configured to perform a receiving/sending-related operation (for example, an operation of sending and/or receiving data or a message) of the first management device in the foregoing method embodiments. The processing unit 320 may be configured to perform a processing-related operation of the first management device in the foregoing method embodiments, or an operation other than receiving and sending (for example, an operation other than sending and/or receiving data or a message).

In a possible implementation, the transceiver unit 310 is configured to receive a first message, where the first message is for requesting execution of a management data analytics MDA task, the first message includes an analysis type, and the analysis type is traffic congestion analysis. The transceiver unit 310 is further configured to send a second message, where the second message includes a traffic congestion analysis result.

Optionally, the processing unit 320 is configured to determine the traffic congestion analysis result.

Optionally, the transceiver unit 310 is further configured to receive a third message, where the third message includes an optimization measure for traffic congestion, and the third message indicates to perform the optimization measure. The processing unit 320 is configured to perform the optimization measure.

In a second possible design, the apparatus 300 may be the second management device in the foregoing embodiments, and the apparatus 300 may implement steps or procedures that are performed by the second management device in the foregoing method embodiments. The transceiver unit 310 may be configured to perform a receiving/sending-related operation (for example, an operation of sending and/or receiving data or a message) of the second management device in the foregoing method embodiments. The processing unit 320 may be configured to perform a processing-related operation of the second management device in the foregoing method embodiments, or an operation other than receiving and sending (for example, an operation other than sending and/or receiving data or a message).

In a possible implementation, the transceiver unit 310 is configured to send a first message, where the first message is for requesting execution of a management data analytics MDA task, the first message includes an analysis type, and the analysis type is traffic congestion analysis. The transceiver unit 310 is further configured to receive a second message, where the second message includes a traffic congestion analysis result.

Optionally, the processing unit 320 is configured to determine a third message based on the traffic congestion analysis result, where the third message includes an optimization measure for traffic congestion, and the third message indicates to perform the optimization measure. The transceiver unit 310 is further configured to send the third message.

It should be understood that a specific process in which the units perform the foregoing corresponding steps is described in detail in the foregoing method embodiments. For brevity, details are not described herein.

It should be further understood that the apparatus 300 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 300 may be specifically the management device in the foregoing embodiments, and may be configured to perform procedures and/or steps corresponding to the management device in the foregoing method embodiments. To avoid repetition, details are not described herein again.

The apparatus 300 in each of the foregoing solutions has a function of implementing corresponding steps performed by the management device (for example, the first management device or the second management device) in the foregoing methods. The functions may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit 310 may alternatively be a transceiver circuit (for example, may include a receiver circuit and a transmitter circuit), and the processing unit may be a processing circuit.

It should be noted that the apparatus in FIG. 3 may be the management device (for example, the first management device or the second management device) in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit that is integrated on the chip. This is not limited herein.

FIG. 4 is a diagram of another communication apparatus 400 according to an embodiment of this application. The apparatus 400 includes a processor 410. The processor 410 is coupled to a memory 420. The memory 420 is configured to store a computer program or instructions and/or data. The processor 410 is configured to: execute the computer program or the instructions stored in the memory 420, or read the data stored in the memory 420, to perform the methods in the foregoing method embodiments.

Optionally, there are one or more processors 410.

Optionally, there are one or more memories 420.

Optionally, the memory 420 and the processor 410 are integrated together or disposed separately.

Optionally, as shown in FIG. 4, the apparatus 400 further includes a transceiver 430, and the transceiver 430 is configured to receive and/or send a signal. For example, the processor 410 is configured to control the transceiver 430 to receive and/or send a signal.

As an example, the processor 410 may have a function of the processing unit 320 shown in FIG. 3, the memory 420 may have a function of a storage unit, and the transceiver 430 may have a function of the transceiver unit 310 shown in FIG. 3.

In a solution, the apparatus 400 is configured to implement operations performed by a management device (for example, the first management device or the second management device) in the foregoing method embodiments.

For example, the processor 410 is configured to execute the computer program or the instructions stored in the memory 420, to implement a related operation of the management device in the foregoing method embodiments.

It should be understood that, the processor mentioned in embodiments of this application may be a central processing unit (central processing unit, CPU), and may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 5 is a diagram of a chip system 500 according to an embodiment of this application. The chip system 500 (or may also be referred to as a processing system) includes a logic circuit 510 and an input/output interface (input/output interface) 520.

The logic circuit 510 may be a processing circuit in the chip system 500. The logic circuit 510 may be coupled and connected to a storage unit, and invoke instructions in the storage unit, so that the chip system 500 can implement the methods and functions in embodiments of this application. The input/output interface 520 may be an input/output circuit in the chip system 500, and outputs information processed by the chip system 500, or inputs to-be-processed data or signaling information to the chip system 500 for processing.

In a solution, the chip system 500 is configured to implement operations performed by a management device (for example, the first management device or the second management device) in the foregoing method embodiments.

For example, the logic circuit 510 is configured to implement processing-related operations performed by the management device (for example, the first management device or the second management device) in the foregoing method embodiments, and the input/output interface 520 is configured to implement sending-related and/or receiving-related operations performed by the management device (for example, the first management device or the second management device) in the foregoing method embodiments.

An embodiment of this application further provides a computer-readable storage medium. The computer-readable storage medium stores computer instructions for implementing the methods performed by a management device (for example, the first management device or the second management device) in the foregoing method embodiments.

For example, when a computer program is executed by a computer, the computer is caused to implement the method performed by the management device (for example, the first management device or the second management device) in the foregoing method embodiments.

An embodiment of this application further provides a computer program product, including instructions. When the instructions are executed by a computer, the method performed by a management device (for example, the first management device or the second management device) in the foregoing method embodiments is implemented.

An embodiment of this application further provides a communication system. The communication system includes the first management device and/or the second management device in the foregoing embodiments. For example, the system includes the first management device and the second management device in the embodiment in FIG. 2.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the foregoing usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A traffic congestion analysis method, comprising:
receiving a first message, wherein the first message is for requesting execution of a management data analytics MDA task, the first message comprises an analysis type, and the analysis type is traffic congestion analysis; and
sending a second message, wherein the second message comprises a traffic congestion analysis result.

2. The method according to claim 1, wherein the first message comprises policy information, the policy information comprises at least one of first information and second information, the first information is for identifying burst traffic congestion, and the second information is for identifying non-burst traffic congestion.

3. The method according to claim 2, wherein the first information or the second information comprises an analysis parameter, and the analysis parameter comprises at least one of an average user number threshold, a physical resource block PRB utilization threshold, a downlink user rate threshold, a deviation of an average user number threshold, and a deviation of a downlink PRB utilization threshold.

4. The method according to claim 2 or 3, wherein the first message further comprises third information, and the third information indicates an applicable scope of the policy information.

5. The method according to any one of claims 1 to 4, wherein the traffic congestion analysis result comprises a traffic congestion type, and the traffic congestion type is burst traffic congestion or non-burst traffic congestion.

6. The method according to any one of claims 1 to 5, wherein the traffic congestion analysis result comprises at least one of the following analysis results: a traffic congestion state, a traffic congestion level, traffic congestion area information, and a recommended optimization measure for traffic congestion, wherein the traffic congestion state is potential congestion, actual congestion, or congestion vanished.

7. The method according to claim 6, wherein the recommended optimization measure comprises a recommended optimization measure for burst traffic congestion and a recommended optimization measure for non-burst traffic congestion, wherein
the recommended optimization measure for burst traffic congestion comprises at least one of the following optimization measures: performing mobility robustness optimization MRO, performing mobility load balancing MLB, and performing coverage and capacity optimization CCO, and
the recommended optimization measure for non-burst traffic congestion comprises at least one of the following optimization measures: performing MRO, performing MLB, performing CCO, adding a sector, and adding a base station.

8. The method according to any one of claims 1 to 7, wherein the method further comprises:
receiving a third message, wherein the third message comprises an optimization measure for traffic congestion, and the third message indicates to perform the optimization measure.

9. The method according to any one of claims 1 to 8, wherein the first message further comprises analysis result requirement information, and the analysis result requirement information is for requesting a specific analysis result.

10. A traffic congestion analysis method, comprising:
sending a first message, wherein the first message is for requesting execution of a management data analytics MDA task, the first message comprises an analysis type, and the analysis type is traffic congestion analysis; and
receiving a second message, wherein the second message comprises a traffic congestion analysis result.

11. The method according to claim 10, wherein the first message comprises policy information, the policy information comprises at least one of first information and second information, the first information is for identifying burst traffic congestion, and the second information is for identifying non-burst traffic congestion.

12. The method according to claim 11, wherein the first information or the second information comprises an analysis parameter, and the analysis parameter comprises at least one of an average user number threshold, a physical resource block PRB utilization threshold, a downlink user rate threshold, a deviation of an average user number threshold, and a deviation of a downlink PRB utilization threshold.

13. The method according to claim 11 or 12, wherein the first message further comprises third information, and the third information indicates an applicable scope of the policy information.

14. The method according to any one of claims 10 to 13, wherein the traffic congestion analysis result comprises a traffic congestion type, and the traffic congestion type is burst traffic congestion or non-burst traffic congestion.

15. The method according to any one of claims 10 to 14, wherein the traffic congestion analysis result comprises at least one of the following analysis results: a traffic congestion state, a traffic congestion level, traffic congestion area information, and a recommended optimization measure for traffic congestion, wherein the traffic congestion state is potential congestion, actual congestion, or congestion vanished.

16. The method according to claim 15, wherein the recommended optimization measure comprises a recommended optimization measure for burst traffic congestion and a recommended optimization measure for non-burst traffic congestion, wherein
the recommended optimization measure for burst traffic congestion comprises at least one of the following optimization measures: performing mobility robustness optimization MRO, performing mobility load balancing MLB, and performing coverage and capacity optimization CCO, and
the recommended optimization measure for non-burst traffic congestion comprises at least one of the following optimization measures: performing MRO, performing MLB, performing CCO, adding a sector, and adding a base station.

17. The method according to any one of claims 10 to 16, wherein the method further comprises:
determining a third message based on the traffic congestion analysis result, wherein the third message comprises an optimization measure for traffic congestion, and the third message indicates to perform the optimization measure; and
sending the third message.

18. The method according to any one of claims 10 to 17, wherein the first message further comprises analysis result requirement information, and the analysis result requirement information is for requesting a specific analysis result.

19. A communication apparatus, comprising a module or a unit configured to perform the method according to any one of claims 1 to 18.

20. A communication apparatus, comprising at least one processor, wherein
the at least one processor is configured to execute a computer program or instructions stored in a memory, to perform the method according to any one of claims 1 to 18.

21. A computer-readable storage medium, wherein the computer-readable storage medium stores a computer program or instructions, and when the computer program or the instructions are run on a communication apparatus, the communication apparatus is caused to perform the method according to any one of claims 1 to 18.

22. A computer program product, wherein the computer program product comprises a computer program or instructions used to perform the method according to any one of claims 1 to 18.

23. A communication system, comprising a first management device and a second management device, wherein
the first management device is configured to perform the method according to any one of claims 1 to 9, and the second management device is configured to perform the method according to any one of claims 10 to 18.
